# EUROPEAN PATENT SPECIFICATION

(11) **EP 3 865 237 B1**
(45) Date of publication and mention of the grant of the patent: **25.11.2026**
(21) Application number: 19870747.3
(22) Date of filing: 24.09.2019
(51) Int. Cl.: B23C 5/10

(54) **END MILL**
SCHAFTFRÄSER
FRAISE EN BOUT

(30) Priority: 11.10.2018 JP 2018192546
(43) Date of publication of application: 18.08.2021
(73) Proprietor: MOLDINO Tool Engineering, Ltd., Tokyo 130-0026 (JP)
(72) Inventor: BABA, Makoto, Yasu-shi, Shiga 520-2323 (JP); HIROSE, Ryou, Yasu-shi, Shiga 520-2323 (JP); TOKUYAMA, Akira, Yasu-shi, Shiga 520-2323 (JP)
(74) Representative: Hoffmann Eitle
(86) International application number: PCT/JP2019/037358
(87) International publication number: WO 2020/075489

(56) References cited:
- WO-A1-2018/123428
- JP-A- 2007 229 849
- JP-A- H11 156 621
- US-A- 4 968 195

## Description

### [Technical Field]

The present invention particularly relates to an end mill used for cutting a die or the like with a triaxial machining device.

### [Background Art]

For example, as an end mill used for cutting a die or the like, in general, a ball end mill as described in JP H05-337718 A is known. That is, in the ball end mill, in general, multiple chip discharge grooves are formed on an outer periphery of a leading end portion of a shaft-shaped end mill main body which is rotated around an axis so as to extend from a leading end to a trailing end side of the end mill main body at intervals in a circumferential direction.

Moreover, a cutting blade is formed on an outer peripheral side ridge portion of a wall surface of the chip discharge groove facing an end mill rotation direction. This cutting blade includes a hemispherical bottom blade whose rotation locus around the axis has a center on the axis at a leading end portion in an axial direction, and an outer peripheral blade having a cylindrical surface shape which is connected to the bottom blade and whose rotation locus around the axis has the axis as a center at a trailing end portion.

JP H11 156621 A is related to the preamble of claim 1.

### [Summary of Invention]

### [Technical Problem]

Meanwhile, using the ball end mill, when an inclined surface portion between a vertical wall portion having a small inclination angle and a bottom surface portion having a large inclination angle with respect to the axis of an inner wall surface of a die or the like is cut by a triaxial machining device, an end mill main body is fed in a direction perpendicular to the axis to perform contour line machining, and thus, a cutting surface is formed on the inclined surface portion by a leading end outer peripheral portion of the bottom blade whose rotation locus is hemispherical. Moreover, the cutting is repeated in a stepwise manner by moving the end mill main body in an axial direction at a predetermined pitch so that cutting surfaces overlap each other, and thus, the inclined surface portion as described above is formed.

Accordingly, in a case where a tool diameter which is a maximum outer diameter of a cutting blade, that is, the diameter of a hemisphere formed by a rotation locus of the bottom blade is small, when the pitch increases, a boundary portion between the overlapping cutting surfaces protrudes. As a result, machined surface roughness is impaired, it is evitable to reduce the pitch, and machining efficiency decreases. Meanwhile, in a ball end mill having a large tool diameter, the size of an end mill main body thereof also increases. Accordingly, the rotational driving force should be increased, and thus, the cost increases.

The present invention is made in consideration of the background, and an object thereof is to provide an end mill capable of obtaining excellent machined surface roughness even when a movement pitch in an axial direction is increased to improve machining efficiency, particularly in a case where an inclined surface portion of a work material is cut, without increasing the rotational driving force or the cost of an end mill main body.

### [Solution to Problem]

According to one aspect of the present invention, there is provided an end mill including the features of claim 1 and in particular: a shaft-shaped end mill main body which is rotated around an axis in an end mill rotation direction; a chip discharge groove which is formed on an outer periphery of a leading end portion of the end mill main body and extends from a leading end side to a trailing end side of the end mill main body; and a cutting blade which has an outer peripheral blade formed on an outer peripheral side ridge portion of a wall surface of the chip discharge groove facing the end mill rotation direction, in which in the outer peripheral blade, a cross section along the axis of a rotation locus around the axis has a convex curved shape which protrudes toward an outer peripheral side of the end mill main body. Moreover, the curvature radius of a convex curve formed by the cross section of the rotation locus of the outer peripheral blade is set to be larger than 1/2 of an outer diameter of the cutting blade which is a maximum diameter of the cutting blade and 3 times or less the outer diameter, and in the cross section along the axis, the center of the convex curve of the rotation locus of the outer peripheral blade is located on a side opposite to the outer peripheral blade with the axis therebetween, the outer peripheral blade is twisted to a side opposite to the end mill rotation direction toward a trailing end side of the end mill main body, and a twist angle of the outer peripheral blade is 20° or more, and a radial rake angle of the outer peripheral blade is -20° or more and 0° or less.

In the end mill having this configuration, the cross section along the axis of the rotation locus of the outer peripheral blade around the axis has the convex curved shape which protrudes toward an outer peripheral side of the end mill main body, the curvature radius of the convex curve is set to be larger than 1/2 of the outer diameter of the cutting blade which is the maximum diameter of the cutting blade, and the center of the convex curve is located on a side opposite to the outer peripheral blade with the axis therebetween. Accordingly, compared to a bottom blade in which the curvature radius (radius) is 1/2 of an outer diameter of a cutting blade like a bottom blade of a ball end mill having a hemispherical rotation locus, if the outer diameters of the cutting blades are the same as each other, it is possible to prevent a boundary portion between cutting surfaces from largely protruding even when a movement pitch increases during cutting of a vertical wall.

Moreover, In the end mill having the above configuration, the twist angle of the outer peripheral blade is 20° or more, and the radial rake angle of the outer peripheral blade is 0° or less. Accordingly, the outer peripheral blade can have sharpness while securing a blade edge strength, and a cutting load can be reduced. Therefore, the size of the end mill main body does not increase, excellent machined surface roughness can be obtained even when the end mill main body is moved in an axial direction at a large movement pitch, and it is possible to efficiently cut a vertical wall of a work material with high quality.

However, if the curvature radius of the convex curve formed by the rotation locus of the outer peripheral blade is too large, the outer peripheral blade bites the work material over a wide range in the axial direction, a cutting resistance increases, and chatter vibrations are generated. Accordingly, there is a concern that the machined surface roughness may be impaired. Therefore, the curvature radius of the convex curve formed by the rotation locus of the outer peripheral blade is 3 times or less the outer diameter of the cutting blade. Further, if the radial rake angle of the outer peripheral blade is too small, similarly, there is a concern that the cutting resistance increases. Therefore, the radial rake angle of the outer peripheral blade is set to -20° or more.

Here, the convex curve formed by the cross section of the rotation locus of the outer peripheral blade is formed so as to gradually extend toward the inner peripheral side as the convex curve extends toward the leading end side of the end mill main body. Accordingly, in a triaxial machining device, by moving the end mill main body along an inclination of an inclined surface portion of the work material at a predetermined pitch toward a leading end side in the axial direction, and thus, it is possible to perform the cutting without interference between the end mill main body and a vertical wall portion of an inner wall surface of the work material. Further, when cutting the inclined surface portion inclined with respect to the axis along the inclination of the convex curve, a position of the outer peripheral blade in contact with the inclined surface (machined surface) portion can be set to an outer peripheral side with respect to a ball end mill having the same outer diameter of the cutting blade, a cutting speed increases, and the cutting resistance can be reduced.

Moreover, in this case, preferably, in the cross section along the axis of the rotation locus around the axis, regarding a virtual taper line connecting an intersection between an extension line of the convex curve formed by the rotation locus of the outer peripheral blade and a straight line which passes through a position of the maximum diameter of the cutting blade and is parallel to the axis to an inner peripheral end of the convex curve formed by the rotation locus of the outer peripheral blade, a virtual taper angle of the virtual taper line with respect to the axis is within a range of 25° or more and 65° or less.

When this virtual taper angle is less than 25°, the convex curve formed by the rotation locus of the outer peripheral blade is close to a state parallel to the axis in the cross section, and the position of the outer peripheral blade for performing cutting on the inclined surface portion is the same as that of the ball end mill having the same outer diameter of the cutting blade. Accordingly, as described above, there is a concern that it is difficult to increase the cutting speed and reduce the cutting resistance. Further, when the virtual taper angle exceeds 65°, a length of the outer peripheral blade in the axial direction is short, and thus, there is a concern that a movement pitch of the end mill main body in the axial direction should be reduced when cutting the inclined surface portion.

Further, preferably, in the cross section along the axis, a center of the convex curve of the rotation locus of the outer peripheral blade is located on an inner peripheral side of a straight line which passes through a position of the maximum diameter of the cutting blade on a side opposite to the outer peripheral blade with the axis therebetween and is parallel to the axis. Therefore, a cutting load acting from the outer peripheral blade toward the center of the convex curve during cutting can be received by the end mill main body on the inner peripheral side of the maximum diameter of the cutting blade. Accordingly, it is possible to prevent the leading end portion of the end mill main body from being bent by the cutting load.

Meanwhile, the twist angle of the outer peripheral blade is 40° or more. Accordingly, the outer peripheral blade has a higher sharpness, the cutting resistance can be further reduced, and the machined surface roughness can be improved. Further, the radial rake angle of the outer peripheral blade is -10° or more and -3° or less. Accordingly, it is possible to further reduce the cutting resistance and surely secure the blade edge strength.

Moreover, a core thickness of the end mill main body in a cross section, which is orthogonal to the axis, of a portion where the outer peripheral blade is formed is 70% or more and 85% or less of the diameter of the outer peripheral blade in the same cross section. Accordingly, the chip discharge groove can secure a sufficient size, improved chip discharge performance can be obtained, and it is possible to increase rigidities of the end mill main body in the portion on which the outer peripheral blade is formed and prevent chatter vibrations and bending of the end mill main body due to the cutting resistance. Therefore, it is possible to further improve the machined surface roughness.

Furthermore, a length of the outer peripheral blade in the axial direction is within a range of 0.2 times or more and 1.0 time or less the outer diameter.
Accordingly, a machining width of the vertical wall in one contour line machining can be sufficiently secured, and even when a bottom surface horizontal to the work material or an inclined surface having a gentler inclination than that of the vertical wall is formed following the vertical wall, and the cutting can be performed by the triaxial machining device until the end mill main body can be moved very close to the bottom surface or the machined surface.

Moreover, the cutting blade may further include a bottom blade in which a cross section along the axis of the rotation locus around the axis has a center on the axis and which forms a convex curved shape being in contact with a leading end of the convex curve formed by the cross section of the rotation locus of the outer peripheral blade, on the leading end portion of the end mill main body. In this case, for example, when the horizontal bottom surface is formed following the vertical wall as described above, it is possible to perform cutting of a corner portion between the vertical wall and the bottom surface using the bottom blade by the triaxial machining device.

However, when the bottom blade is formed on the leading end portion of the end mill main body, it is desirable that the curvature radius of the convex curve formed by the cross section of the rotation locus of the outer peripheral blade be within a range of 5 times or more and 20 times or less the curvature radius of a convex curve formed by the cross section of the rotation locus of the bottom blade. If the curvature radius of the outer peripheral blade is larger than this range, the curvature radius of the bottom blade is too small, and thus there is a concern that defects may occur. Meanwhile, if the curvature radius of the outer peripheral blade is smaller than this range, the curvature radii of the bottom blade and the outer peripheral blade are substantially the same, which is the same as cutting with a ball end mill.

Meanwhile, the cutting blade further includes a trailing end blade at a trailing end portion of the outer peripheral blade, and a cross section of a rotation locus of the trailing end blade along the axis of the rotation locus around the axis has a convex curved shape in contact with a trailing end of the convex curve formed by the cross section of the rotation locus of the outer peripheral blade and a straight line which passes through a position of the maximum diameter of the cutting blade and parallel to the axis. In this way, the trailing end blade is formed, and thus, the convex curved trailing end blade is an outermost periphery of the cutting blade. Accordingly, as compared with a case where the outer peripheral blade passes through the position of the maximum diameter at an angle and the rotation locus intersects the straight line parallel to the axis, it is possible to prevent a defect or the like from occurring.

With the trailing end blade formed on the trailing end portion of the outer peripheral blade, it is advantageous that the curvature radius of the convex curve formed by the cross section of the rotation locus of the outer peripheral blade is within a range of 5 times or more and 20 times or less the curvature radius of a convex curve formed by the cross section of the rotation locus of the trailing end blade. If the curvature radius of the outer peripheral blade is larger than this range, the curvature radius of the trailing end blade may be too small, and thus, there is a concern that it is not possible to prevent the occurrence of the defects as described above. Meanwhile, if the curvature radius of the outer peripheral blade is smaller than this range, the curvature radii of the trailing end blade and the outer peripheral blade are substantially the same, which is the same as the cutting with a ball end mill.

### [Advantageous Effects of Invention]

As described above, according to the present invention, it is possible to improve the machining efficiency even when a vertical wall of a work material is cut by a triaxial machining device particularly, without increasing the rotational driving force and the cost due to an increase in the size of an end mill main body, and obtain an excellent machined surface roughness.

### [Brief Description of Drawings]

Fig. 1 is a perspective view of a leading end portion of an end mill main body illustrating an embodiment of the present invention.
Fig. 2 is a side view of a leading end portion of the embodiment illustrated in Fig. 1.
Fig. 3 is a front view when the leading end portion of the embodiment illustrated in Fig. 1 is viewed from a leading end side in an axial direction.
Fig. 4 is a cross-sectional view taken along an axis of a rotation locus around an axis of a leading end portion of the embodiment illustrated in Fig. 1.
Fig. 5 is a cross-sectional view (a cross-sectional view at a position of 2 mm from a leading end toward a trailing end side of the end mill main body in the axial direction) taken along line Z-Z in Fig. 2.

### [Description of embodiments]

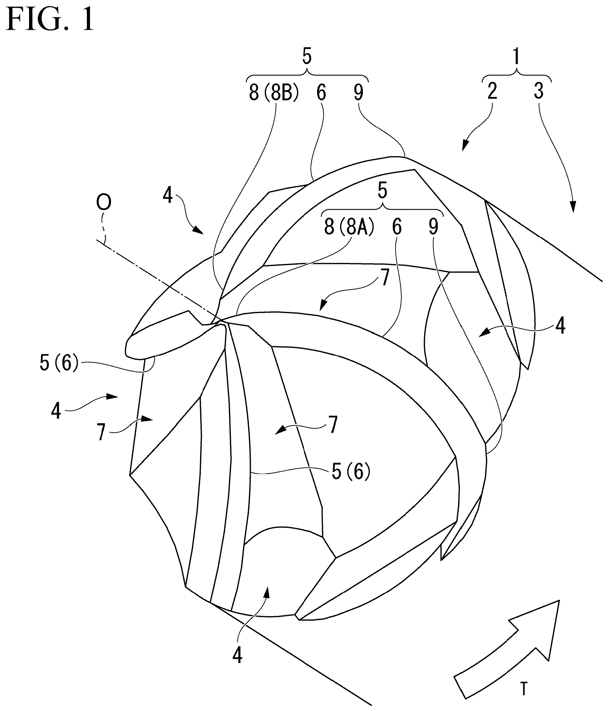

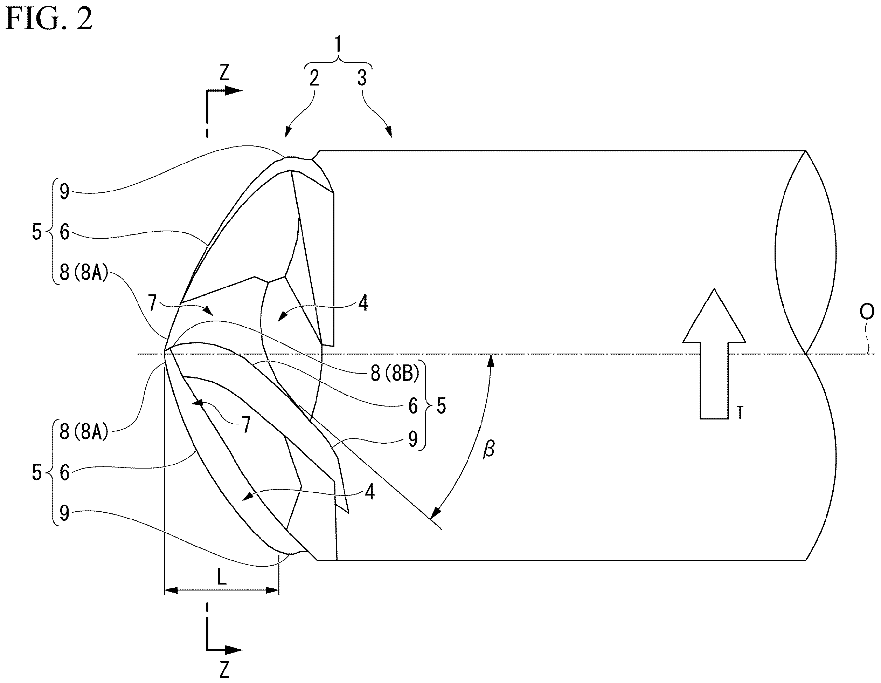

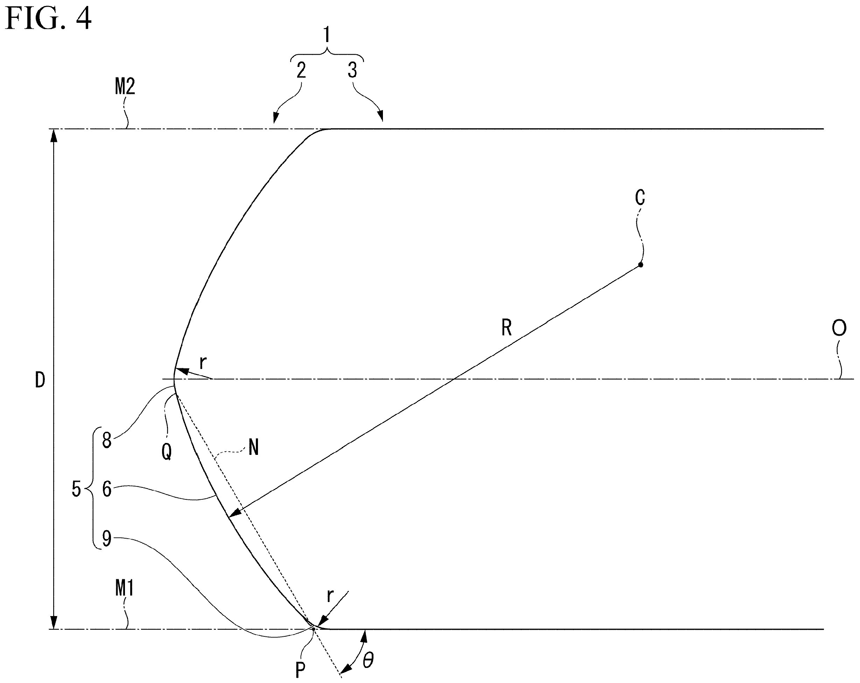

Fig. 1 to 5 illustrate an end mill according to an embodiment of the present invention. In the present embodiment, for example, an end mill main body 1 is integrally formed of a hard metal material such as cemented carbide or high-speed tool steel, and has a substantially columnar shaft shape with an axis O as a center. A blade portion 2 is formed at a leading end of a leading end portion (left portion in Figs. 2 and 4) of the end mill main body 1, and a trailing end portion (right portion in Figs. 2 and 4) other than the blade portion 2 is a shank portion 3 which remains columnar.

For example, the end mill is a cutting tool (rotating tool), in which the shank portion 3 is held by a main shaft of a machine tool such as a machining center which is a triaxial machining device and is normally fed in a direction perpendicular to the axis O while being rotated around the axis O in an end mill rotation direction T, and thus, the blade portion 2 perform cutting (rotating machining) such as finishing machining or semi-finishing machining on a work material with a relatively small amount of cutting. For example, the end mill of the present embodiment performs various kinds of cutting such as concave curved surface machining, convex curved surface machining, pocket machining, deep drilling, and chamfering on a work material such as a die formed of a metal material.

The blade portion 2 includes a chip discharge groove 4 which is formed to extend from a leading end toward a trailing end side of the blade portion 2. In the present embodiment, a plurality (four) of chip discharge grooves 4 are formed at intervals in a circumferential direction. Moreover, the chip discharge grooves 4 are twisted so as to face a side opposite to the end mill rotation direction T toward a trailing end side of the end mill main body 1.

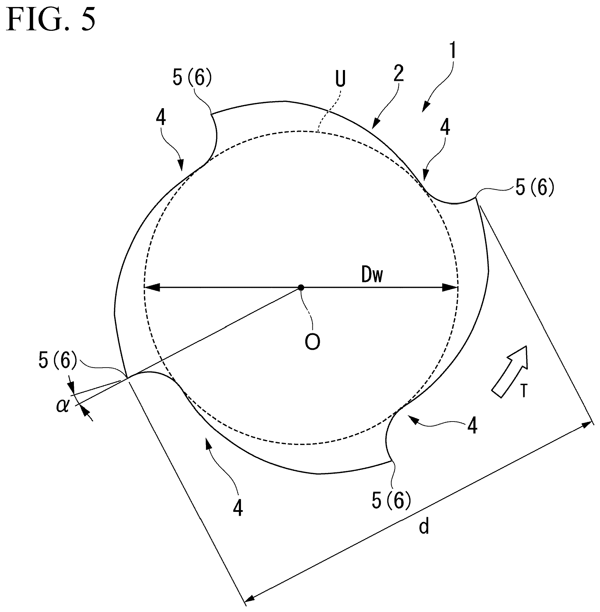

As illustrated in Figs.1 and 5, a wall surface of the chip discharge groove 4 facing the end mill rotation direction T extends so as to face the side opposite to the end mill rotation direction T toward an outer peripheral side. In addition, for example, outer peripheral blades 6 are formed as cutting blades 5 on outer peripheral side ridge portions of the wall surfaces at equal intervals in the circumferential direction. That is, the end mill of the present embodiment is a four-blade solid end mill.

Therefore, the wall surface of the chip discharge groove 4 facing the end mill rotation direction T is a rake surface of the outer peripheral blade 6, an outer peripheral surface of the blade portion 2 intersecting the rake surface via the outer peripheral blade 6 is the outer peripheral blade 6 is a flank, and in the present embodiment, the outer peripheral blade 6 includes a negative radial rake angle α and a positive twist angle β. Moreover, a plurality of (four) outer peripheral blades 6 which are formed in each of the plurality of chip discharge grooves 4 have rotation loci which coincide with each other around the axis O.

Further, a concave groove-shaped gash 7 extending toward an inner peripheral side of the blade portion 2 is formed at the leading end portion of the chip discharge groove 4, and a bottom blade 8 connected to the leading end of the outer peripheral blade 6 is also formed as the cutting blade 5 at a ridge portion extending from a leading end of a wall surface of the gash 7 facing the end mill rotation direction T to the outer peripheral side. Therefore, the wall surface of the gash 7 facing the end mill rotation direction T is the rake surface of the bottom blade 8, and a leading end surface of the blade portion 2 connected to the rake surface via the bottom blade 8 is a flank of the bottom blade 8.

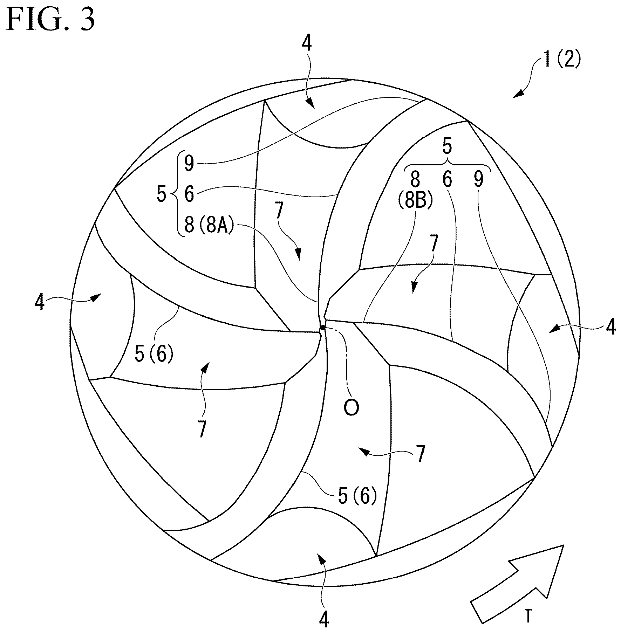

In the present embodiment, as illustrated in Fig. 3, the bottom blade 8 is formed so that, when viewed from a leading end side in a direction of the axis O, a long bottom blade 8A extending beyond the axis O while drawing a convex curve which protrudes from the leading end of the outer peripheral blade 6 in the end mill rotation direction T and a short bottom blade 8B extending without crossing the axis O while drawing a convex curve which protrudes from the leading end of the outer peripheral blade 6 in the end mill rotation direction T are alternately located in the circumferential direction. However, the long bottom blades 8A do not intersect with the axis O, and inner peripheral ends of the long bottom blades 8A mutually pass in the radial direction with respect to the axis O.

As illustrated in Fig. 4, a cross section of the outer peripheral blade 6 along the axis O of the rotation locus around the axis O has a convex curved shape which protrudes toward the outer peripheral side of the end mill main body 1. The convex curve formed by the cross section of the rotation locus of the outer peripheral blade 6 is a convex arc in the present embodiment, and gradually extends toward the inner peripheral side as the convex curve extends toward the leading end side of the end mill main body 1. Moreover, the cross section the rotation locus of the bottom blade 8 around the axis O also is a convex arc, and the bottom blade 8 is located on one convex hemispherical surface which is in contact with the leading end of the outer peripheral blade 6 in the rotation locus of the outer peripheral blade 6 and has a center on the axis O.

Further, the cutting blade 5 has a trailing end blade 9 at the trailing end portion of the outer peripheral blade 6, and a cross section of the trailing end blade 9 along the axis O of the rotation locus around the axis O has a convex curved shape in contact with the trailing end of the convex curve formed by the cross section of the rotation locus of the outer peripheral blade 6 and a straight line M1 which passes through a position of a maximum diameter of the cutting blade 5 and is parallel to the axis O. In the present embodiment, the cross section of the rotation locus around the axis O of the trailing end blade 9 is also a convex arc. Therefore, in the present embodiment, the diameter of the cutting blade 5, that is, the diameter of a circle formed by the cutting blade 5 around the axis O is the maximum at the position of the outer peripheral end of the trailing end blade 9.

Moreover, the curvature radius (a radius of the convex arc formed by the convex curve) R of the convex curve formed by the cross section along the axis O of the rotation locus of the outer peripheral blade 6 around the axis O is larger than 1/2 of an outer diameter D of the cutting blade 5 which is a maximum diameter of the cutting blade 5 and 3 times or less the outer diameter D. In the present embodiment, the curvature radius R of the convex curve is equal to the outer diameter D of the cutting blade 5. Further, as illustrated in Fig. 4, the center (the center of the convex arc formed by the convex curve) C of the convex curve formed by the cross section along the axis O of the rotation locus of the outer peripheral blade 6 around the axis O is located on a side opposite to the outer peripheral blade 6 with the axis O therebetween.

However, in the present embodiment, in a cross section along the axis O as illustrated in Fig. 4, the center (the center of the convex arc formed by the convex curve) C of the convex curve formed by the cross section along the axis O of the rotation locus of the outer peripheral blade 6 around the axis O is located on an inner peripheral side of the end mill main body 1 of a straight line M2 which passes through the position (outer peripheral end of the trailing end blade 9) of the maximum diameter of the cutting blade 5 on the side opposite to the outer peripheral blade 6 with the axis O therebetween and is parallel to the axis O.

Further, in the outer peripheral blade 6 extending gradually toward the inner peripheral side toward the leading end side of the end mill main body 1, in the cross section along the axis O of the rotation locus around the axis O, as illustrated in Fig. 4, when a straight line connecting an intersection P between an extension line to the outer peripheral side of the end mill main body 1 having the convex curve formed by the rotation locus of the outer peripheral blade 6 and the straight line M1 which passes through the position (outer peripheral end of the trailing end blade 9) of the maximum diameter of the cutting blade 5 and is parallel to the axis O to an inner peripheral end (contact point between the outer peripheral blade 6 and the bottom blade 8) Q of the convex curve formed by the rotation locus of the outer peripheral blade 6 is referred to as a virtual taper line N and an angle of the virtual taper line N with respect to a straight line (for example, a straight line formed by a cross section along the axis O of an outer peripheral surface of the columnar shank portion 2 as illustrated in Fig. 4) parallel to the axis O is referred to as a virtual taper angle θ, the virtual taper angle θ is within a range of 25° or more and 65° or less.

Further, the outer peripheral blade 6 is twisted in a direction opposite to the end mill rotation direction T toward the trailing end side of the end mill main body 1 and has a positive twist angle β as described above. Moreover, the twist angle β of the outer peripheral blade 6 is 20° or more, and preferably, 40° or more. Moreover, in the present embodiment, the radial rake angle α of the outer peripheral blade 6 is a negative angle as described above. However, the radial rake angle α is -20° or more and 0° or less, and preferably, -10° or more and -3° or less.

Furthermore, a core thickness Dw of the blade portion 2 of the end mill main body 1 in a cross section, which is orthogonal to the axis O, of a portion where the outer peripheral blade 6 is formed, that is, as illustrated in Fig. 5, the diameter of a core thickness circle U inscribed in a bottom surface of the chip discharge groove 4 facing the outer peripheral side of the end mill main body 1 in the cross section, which is orthogonal to the axis O, is 70% or more and 85% or less of the diameter d of the outer peripheral blade 6 in the same cross section. Further, a length L of the outer peripheral blade 6 in the direction of the axis O is within a range of 0.2 times or more and 1.0 time or less the outer diameter D which is the maximum diameter of the cutting blade 5.

Further, the curvature radius R of the convex curve formed by the cross section along the axis O of the rotation locus of the outer peripheral blade 6 around the axis O is within a range of 5 times or more and 20 times or less the curvature radius r1 of a convex curve (convex arc) formed by the cross section along the axis O of the rotation locus of the bottom blade 8 around the axis O. Further, the curvature radius R of the convex curve formed by the cross section along the axis O of the rotation locus of the outer peripheral blade 6 around the axis O is within a range of 5 times or more and 20 times or less the curvature radius r2 of a convex curve (convex arc) formed by the cross section along the axis O of the rotation locus of the trailing end blade 9.

For example, the end mill configured in this way is used to cut the inclined surface portion, between the vertical wall portion having a small inclination angle and the bottom surface portion having a large inclination angle with respect to the axis O, of the inner wall surface of a work material such as a die, as described above. That is, for example, contour line machining is performed by aligning the position of the blade portion 2 with an upper end portion of the inclined surface portion and feeding out the end mill main body 1 in the direction perpendicular to the axis O. Next, the end mill main body 1 is moved to a leading end side in the direction of the axis O at a predetermined pitch so that the cutting surfaces of the blade portion 2 overlap each other, contour line machining is performed again, and by repeating the contour line machining, the inclined surface portion is cut.

Here, in the end mill having the above-described configuration, the cross section along the axis O of the rotation locus of the outer peripheral blade 6 around the axis O has a convex curved shape which protrudes toward the outer peripheral side of the end mill main body 1, and the curvature radius R of the convex curve is larger than 1/2 of the outer diameter D of the cutting blade 5 which is the maximum diameter of the cutting blade 5. Therefore, compared to a bottom blade in which the curvature radius (radius) is 1/2 of an outer diameter of a cutting blade like the bottom blade of a ball end mill having a hemispherical rotation locus, if the outer diameters D of the cutting blades 5 are the same as each other, it is possible to prevent a boundary portion between the cutting surfaces from largely protruding even when the movement pitch of the end mill main body 1 increases during the cutting of the inclined surface portion as described above.

In addition, in the end mill having the above configuration, the twist angle β of the outer peripheral blade 6 is a positive angle of 20° or more, and the radial rake angle α of the outer peripheral blade 6 is 0° or less, particularly a negative angle. Therefore, since the outer peripheral blade 6 can have sharpness while securing a blade edge strength, a cutting load can be reduced, and excellent machined surface roughness can be obtained when the end mill main body 1 is moved in the direction of the axis O at a small movement pitch without increasing the size of the end mill main body 1. Accordingly, as described above, it is possible to efficiently perform finishing cutting or semi-finishing cutting of the inclined surface portion of the work material with high quality without increasing the rotational driving force of the end mill main body 1 and a cost.

Moreover, if the curvature radius R of the convex curve formed by the cross section of the rotation locus of the outer peripheral blade 6 is too large, the outer peripheral blade 6 bites the work material over a wide range in the direction of the axis O, a cutting resistance increases, and chatter vibrations are generated. Accordingly, there is a concern that the machined surface roughness may be rather impaired. For this reason, the curvature radius R of the convex curve formed by the rotation locus of the outer peripheral blade 6 is 3 times or less the outer diameter D which is the maximum diameter of the cutting blade 5. Further, if the radial rake angle α of the outer peripheral blade 6 is too small, similarly, there is a concern that the cutting resistance increases. Therefore, the radial rake angle α of the outer peripheral blade 6 is set to -20° or more.

Moreover, in the present embodiment, the convex curve formed by the cross section of the rotation locus of the outer peripheral blade 6 is formed so as to gradually extend toward the inner peripheral side of the end mill main body 1 as the convex curve extends toward the leading end side of the end mill main body 1. Therefore, when the inclined surface portion described above is cut by a triaxial machining device, by moving the end mill main body 1 along the inclination of the inclined surface portion at a predetermined pitch toward the leading end side in the direction of the axis O, it is possible to perform the cutting without interference between the end mill main body 1 and the vertical wall portion having a small inclination angle with respect to the axis O. Therefore, it is possible to cut the inclined surface portion without using a machining device which requires complicated control of four or more axes.

Moreover, in this way, the convex curve formed by the cross section along the axis O of the rotation locus of the outer peripheral blade 6 is formed and inclined so as to gradually extend toward the inner peripheral side of the end mill main body 1 toward the leading end side of the end mill main body 1. As a result, when cutting the work material to form the inclined surface portion inclined with respect to the axis O along the inclination of the convex curve, the position of the outer peripheral blade 6 in contact with the inclined surface (machined surface) portion can be set to the outer peripheral side with respect to the ball end mill having the same outer diameter of the cutting blade. Therefore, the cutting speed of the outer peripheral blade 6 in contact with the inclined surface portion can increase, and thus, the cutting resistance can be reduced.

Furthermore, in the present embodiment, in this way, when the convex curve formed by the cross section along the axis O of the rotation locus of the outer peripheral blade 6 is formed and inclined so as to gradually extend toward the inner peripheral side of the end mill main body 1 toward the leading end side of the end mill main body 1, in the virtual taper line N connecting the intersection P between the extension line of the convex curve formed by the rotation locus of the outer peripheral blade 6 and the straight line M1 which passes through the position of the maximum diameter of the cutting blade 5 and is parallel to the axis O to the inner peripheral end Q of the convex curve formed by the rotation locus of the outer peripheral blade 6, the virtual taper angle θ of the virtual taper line with respect to the axis O is within the range of 25° or more and 65° or less. Therefore, it is possible to improve the machining efficiency while surely promoting the reduction of the cutting resistance as described above.

That is, when this virtual taper angle θ is less than 25°, the convex curve formed by the rotation locus of the outer peripheral blade 6 is close to a state parallel to the axis O in the cross section along the axis O, the position of the outer peripheral blade 6 in contact with the inclined surface portion between the vertical wall portion and the bottom surface portion of the inner wall surface of the work material is the inner peripheral side of the end mill main body 1, and the outer diameter of the cutting blade is the same as that of the same ball end mill. Accordingly, as described above, there is a concern that it is difficult to increase the cutting speed and reduce the cutting resistance. Further, when this virtual taper angle θ exceeds 65°, the length of the outer peripheral blade 6 in the direction of the axis O is short, the movement pitch of the end mill main body 1 in the direction of the axis O should be reduced when cutting the inclined surface portion, and thus, there is a concern that the machining efficiency decreases.

Further, in the present embodiment, in the cross section along the axis O, a center C of the convex curve formed by the rotation locus of the outer peripheral blade 6 is located on the inner peripheral side of the straight line M2 which passes through the position of the maximum diameter of the cutting blade 5 on the side opposite to the outer peripheral blade 6 with the axis O therebetween and is parallel to the axis O. Therefore, a cutting load acting from the outer peripheral blade 6 toward the center C of the convex curve during cutting can be received by the end mill main body 1 on the inner peripheral side of the maximum diameter of the cutting blade 5. Accordingly, it is possible to prevent the leading end portion of the end mill main body 1 from being bent by the cutting load and further improve the machined surface roughness.

Furthermore, as described above, by setting the twist angle β of the outer peripheral blade 6 to be 40° or more, the outer peripheral blade 6 has a higher sharpness, the cutting resistance can be further reduced, and the machined surface roughness can be improved. Further, by setting the radial rake angle α of the outer peripheral blade 6 to be -10° or more and -3° or less, it is possible to further reduce the cutting resistance and surely secure the blade edge strength.

Moreover, in the present embodiment, the core thickness Dw of the blade portion 2 of the end mill main body 1 in the cross section, which is orthogonal to the axis O, of the portion where the outer peripheral blade 6 is formed is 70% or more and 85% or less of the diameter d of the outer peripheral blade 6 in the same cross section. Therefore, the chip discharge groove 4 can secure a sufficient size (capacity), chips can be discharged satisfactorily, smooth cutting can be performed, and it is possible to increase rigidities of the end mill main body 1 in the blade portion 2 on which the outer peripheral blade 6 is formed and prevent chattering and bending of the end mill main body 1 due to the cutting resistance. Accordingly, it is possible to further improve the machined surface roughness.

Further, in the present embodiment, the length L of the outer peripheral blade 6 in the direction of the axis O is within a range of 0.2 times or more and 1.0 time or less the outer diameter D of the cutting blade 5. Accordingly, a machining width of the inclined surface portion in one contour line machining can be sufficiently secured to maintain the machining efficiency, and even when a machined surface perpendicular to the axis O or having a gentler inclination than the inclined surface portion is formed on the leading end side in the direction of the axis O following the inclined surface portion, the end mill main body 1 can be moved very close to the bottom surface and the machined surface, and the inclined surface portion can be cut by the triaxial machining device.

Moreover, in the present embodiment, the cutting blade 5 further includes the bottom blade 8 in which the cross section along the axis O of the rotation locus around the axis O has a center on the axis O and which forms a convex curved shape being in contact with a leading end of the convex curve formed by the cross section of the rotation locus of the outer peripheral blade 6, on the leading end portion of the end mill main body 1. Therefore, for example, when the bottom surface portion perpendicular to the axis O or the portion having a gentler inclination than the inclined surface portion is formed following the inclined surface portion of the work material as described above, the triaxial machining device can continuously perform cutting of a corner portion between the inclined surface portion and the bottom surface portion and the cutting of the gentle inclined portion using the bottom blade 8.

Further, in the present embodiment, the cutting blade 5 has the trailing end blade 9 at the trailing end portion of the outer peripheral blade 6, and the cross section of the trailing end blade 9 along the axis O of the rotation locus around the axis O has the convex curved shape in contact with the trailing end of the convex curve formed by the cross section of the rotation locus of the outer peripheral blade 6 and the straight line M1 which passes through the position of the maximum diameter of the cutting blade 5 and is parallel to the axis O. Therefore, since an outermost periphery of the cutting blade 5 is the position of the outer peripheral end of the convex curved trailing end blade 9, for example, as compared with a case where the outer peripheral blade 6 passes through the position of the maximum diameter at an angle and the rotation locus intersects the straight line M1 parallel to the axis O, it is possible to prevent a defect or the like from occurring on the outermost periphery of the cutting blade 5.

In this way, in a case where the bottom blade 8 having the hemispherical rotation locus is formed at the leading end portion of the end mill main body 1, and the trailing end blade 9 having a convex curved rotation locus is formed at the trailing end portion of the outer peripheral blade 6, if the curvature radius R of the convex curve formed by the cross section of the rotation locus of the outer peripheral blade 6 is too large compared to the curvature radius (radius) r of the convex curve (convex arc) formed by the cross section of the rotation locus of the bottom blade 8 or the trailing end blade 9, the curvature radius r of the bottom blade 8 or the trailing end blade 9 is relatively small, and there is a concern that the bottom blade 8 or the trailing end blade 9 may be damaged.

Meanwhile, on the contrary, if the curvature radius R of the outer peripheral blade 6 is relatively smaller than the curvature radius (radius r) of the bottom blade 8 or the trailing end blade 9, the curvature radii r and R of the bottom blade 8 or the trailing end blade 9 and the outer peripheral blade 6 are substantially the same as each other, it is no different from cutting with a ball end mill. Therefore, when the bottom blade 8 is formed at the leading end portion of the end mill main body 1 or the trailing end blade 9 is formed at the trailing end portion of the outer peripheral blade 6 as in the present embodiment, it is desirable that the curvature radius R of the convex curve formed by the cross section of the rotation locus of the outer peripheral blade 6 is within the range of 5 times or more and 20 times or less the curvature radius r of the convex curve formed by the cross section of the rotation locus of the bottom blade 8 or the trailing end blade 9.

In addition, in the present embodiment, the convex curve formed by the cross section along the axis O of the rotation locus of the outer peripheral blade 6 around the axis O is a convex arc. However, the convex curve may be a convex curve such as an elliptic arc or a parabola. Further, in the present embodiment, the convex curve formed by the cross section of the rotation locus of the outer peripheral blade 6 gradually extends toward the inner peripheral side as the convex curve extends toward the leading end side of the end mill main body 1. However, the convex curve may be formed so as to extend once toward the outer peripheral side and expand in diameter toward the leading end side of the end mill main body 1, and then gradually extend toward the inner peripheral side, and in this case, the outer diameter D, which is the maximum diameter of the cutting blade 5, is an outer diameter at a position where the outer peripheral blade 6 has the largest diameter.

### Examples

Next, examples of the present invention are given to demonstrate effects of the curvature radius (hereinafter, referred to as an outer periphery R) of the convex curve formed by the cross section of the rotation locus of the outer peripheral blade of the present invention, the radial rake angle of the outer peripheral blade, and the twist angle of the outer peripheral blade. In the examples, two types of end mills were manufactured based on the above embodiment, in which the number of cutting blades (hereinafter, referred to as the number of blades) was 4, the outer diameter of a cutting blade was 10 mm, a radius (hereinafter, referred to as a leading end R) of a convex curve (convex arc) formed by a rotation locus around an axis of a bottom blade was 1 mm, an outer periphery R was 10 mm which was equal to the outer diameter of the cutting blade, a radius (hereinafter, referred to as a corner R) of a convex curve (convex arc) formed by a rotation locus around an axis of a trailing end blade was 1 mm, the virtual taper angle was 59°, a twist angle of an outer peripheral blade was 30°, the ratio (hereinafter, simply referred to as a core thickness) of a core thickness to the diameter of the outer peripheral blade at a position 2 mm from a leading end of an end mill main body to a trailing end side in an axial direction was 85%, and a radial rake angle of the outer peripheral blade was changed. Taking the end mills as Examples 1 and 2, Table 1 illustrates the number of blades, the outer diameter, the leading end R, the outer periphery R, the corner R, the virtual taper angle, the radial rake angle, the twist angle, and the ratio of the core thickness.

Further, as Comparative examples with respect to Examples 1 and 2, six types of end mills were manufactured, in which the outer diameter of the cutting blade was 10 mm similarly to those of Examples 1 and 2, and at least one of the radial rake angle of the outer peripheral blade, the twist angle of the outer peripheral blade, the virtual taper angle, the core thickness, the number of blades, the outer periphery R, the corner R, and the leading end R was different from those of Examples 1 and 2. The six end mills are illustrated in Table 1 as Comparative Examples 1 to 6 in order. Of these, Comparative Example 6 is a ball end mill, and thus, the leading end R, the outer periphery R, and the corner R are all 5 mm, which is 1/2 of the outer diameter of the cutting blade.

Then, by using the end mills of Examples 1 and 2 and Comparative Examples 1 to 6, contour line machining for feeding the end mill main body in a direction perpendicular to the axis of the end mill main body was repeatedly performed on the leading end side in the axis direction of a vertical wall of a work material by a predetermined pitch, and in this case, surface roughness (maximum height roughness Rz (µm) in JIS B 0601-2013) in the feed direction and the axial direction of the cutting surface (machined surface) was measured. The results are also illustrated in Table 1.

Moreover, in each of the end mills of Examples 1 and 2 and Comparative Examples 1 to 6, a base material of the end mill main body is a cemented carbide, and a surface of the blade portion is coated with a hard film. In addition, the work material was a material equivalent to SKD61 (hardness 43HRC) in JIS G 4404, and the vertical wall inclined by 40° with respect to the horizontal plane was cut by repeating contour line machining in which a rotation speed was 8800 min⁻¹ (cutting speed 276 m/min), the feed rate was 2220 mm/min, and the machining allowance was 0.1 mm at a pitch of 0.2 mm (theoretical cusp 0.5 µm). In addition, the amount of protrusion of the end mill main body was 40 mm, a holder was a milling holder manufactured by Daishowa Seiki Co., Ltd., and wet machining was performed using a water-soluble cutting fluid.

**[Table 1]**

| | Number of blades | Outer diameter (mm) | Leading end R (mm) | Outer periphery R (mm) | Corner R (mm) | Virtual taper angle (°) | Radial rake angle (°) | Twist angle (°) | Core thickness (%) | Surface roughness Rz [µm] | |
|---|---|---|---|---|---|---|---|---|---|---|---|
| | | | | | | | | | | Feed direction | Axial direction |
| Example 1 | 4 | 10 | 1 | 10 | 1 | 59 | -7.6 | 30 | 85 | 0.91 | 1.39 |
| Example 2 | 4 | 10 | 1 | 10 | 1 | 59 | -14.6 | 30 | 85 | 0.98 | 1.41 |
| Comparative Example 1 | 4 | 10 | 1 | 10 | 1 | 59 | -23.2 | 30 | 85 | 1.89 | 3.27 |
| Comparative Example 2 | 4 | 10 | 1 | 10 | 1 | 59 | 0.8 | 30 | 85 | Chipping Occurrence | |
| Comparative Example 3 | 4 | 10 | 1 | 10 | 1 | 59 | -6.3 | 15 | 85 | Chipping Occurrence | |
| Comparative Example 4 | 4 | 10 | 1 | 10 | 1 | 60 | -2.3 | 30 | 63 | 3.21 | 3.53 |
| Comparative Example 5 | 2 | 10 | 1 | 200 | 1.5 | 60 | 1.3 | 20 | 68 | Chipping Occurrence | |
| Comparative Example 6 | 2 | 10 | 5 | 5 | 5 | - | -5.3 | 20 | 70 | 2.52 | 2.88 |

From the results in Table 1, first, in Comparative Example 1 in which the radial rake angle of the outer peripheral blade was -23.2°, which was too large on the negative angle side, the surface roughness was impaired in both the feed direction and the axial direction due to occurrence of peeling on the machined surface. Meanwhile, on the contrary, in Comparative Example 2 in which the radial rake angle of the outer peripheral blade was 0.8°, which was a positive angle and a small blade angle, the blade edge strength was insufficient, chipping occurred in the outer peripheral blade, and it was impossible to continue the cutting. Further, even in Comparative Example 3 in which the twist angle of the outer peripheral blade was as small as 15°, the cutting resistance was too large, chipping occurred in the outer peripheral blade, and thus, it was also impossible to continue the cutting.

Further, in Comparative Example 4 in which the core thickness was as small as 63%, the rigidity of the leading end portion of the end mill main body was insufficient, chatter vibrations occurred during the cutting, and the surface roughness was impaired in both the feed direction and the axial direction. Further, in Comparative Example 5 in which the outer periphery R was as large as 200 mm, the contact length between the outer peripheral blade and the work material was too long, the cutting resistance was too large, and thus, chipping occurred. Furthermore, in Comparative Example 6 which was a ball end mill, since the outer periphery R was 1/2 of the outer diameter of the cutting blade, the surface roughness was impaired in both the feed direction and the axial direction.

In contrast to Comparative Examples 1 to 6, in Examples 1 and 2 according to the present invention, smooth cutting could be performed without causing chipping on the outer peripheral blade, the surface roughness in the feed direction was 1.0 µm or less, the surface roughness in the axial direction was 1.5 µm or less, and it was possible to obtain a good surface roughness.

### [Industrial Applicability]

According to the present invention, it is possible to improve the machining efficiency even when a vertical wall of a work material is cut by a triaxial machining device particularly, without increasing the rotational driving force and the cost due to an increase in the size of an end mill main body, and obtain an excellent machined surface roughness.

### [Reference Signs List]

1: End mill main body
2: Blade portion
3: Shank portion
4: Chip discharge groove
5: Cutting blade
6: Outer peripheral blade
7: Gash
8: Bottom blade
9: Trailing end blade
O: Axis of end mill main body 1
T: End mill rotation direction
R: Curvature radius of convex curve formed by cross section along axis O of rotation locus of outer peripheral blade 6 around axis O
C: Center of convex curve formed by cross section along axis O of rotation locus of outer peripheral blade 6 around axis O
D: Outer diameter of cutting blade 5
r: Curvature radius of convex curve formed by cross section along axis O of rotation locus of bottom blade 8 and trailing end blade 9 around axis O
M1: Straight line which passes through trailing end of convex curve formed by cross section of rotation locus of outer peripheral blade 6 and position of maximum diameter of cutting blade 5 and is parallel to axis O.
M2: Straight line which passes through position (outer peripheral end of trailing end blade 9) of maximum diameter of cutting blade 5 on side opposite to outer peripheral blade 6 with axis O therebetween and is parallel to axis O.
N: Virtual taper line
Dw: Core thickness
d: Diameter of outer peripheral blade 6
L: Length of outer peripheral blade 6 in direction of axis O
α: Radial rake angle of outer peripheral blade 6
β: Twist angle of outer peripheral blade 6
θ: Virtual taper angle

## Claims

1. An end mill comprising:
a shaft-shaped end mill main body (1) which is rotated around an axis (O) in an end mill rotation direction (T);
a chip discharge groove (4) which is formed on an outer periphery of a leading end portion of the end mill main body (1) and extends from a leading end side to a trailing end side of the end mill main body (1); and
a cutting blade (5) which has an outer peripheral blade (6) formed on an outer peripheral side ridge portion of a wall surface of the chip discharge (4) groove facing the end mill rotation direction (T),
wherein in the outer peripheral blade (6), a cross section along the axis (O) of a rotation locus around the axis (O) has a convex curved shape which protrudes toward an outer peripheral side of the end mill main body (1),
a curvature radius (R) of a convex curve formed by the cross section of the rotation locus of the outer peripheral blade (6) is set to be larger than 1/2 of an outer diameter (D) of the cutting blade (5) which is a maximum diameter of the cutting blade (5) and 3 times or less the outer diameter (D),
in the cross section along the axis (O), a center (C) of the convex curve of the rotation locus of the outer peripheral blade (6) is located on a side opposite to the outer peripheral blade (6) with the axis (O) therebetween,
**characterized in that**
the outer peripheral blade (6) is twisted to a side opposite to the end mill rotation direction (T) toward a trailing end side of the end mill main body (1), and a twist angle (β) of the outer peripheral blade (6) is 20° or more,
a radial rake angle (α) of the outer peripheral blade (6) is -20° or more and 0° or less,
the cutting blade (5) further includes a trailing end blade (9) at a trailing end portion of the outer peripheral blade (6), a cross section of a rotation locus of the trailing end blade (9) along the axis (O) of the rotation locus around the axis (O) has a convex curved shape in contact with a trailing end of the convex curve formed by the cross section of the rotation locus of the outer peripheral blade (6) and a straight line (M1) which passes through a position of the maximum diameter of the cutting blade (5) and parallel to the axis (O), the trailing end blade (9) is an outermost periphery of the cutting blade (5), and
the curvature radius (R) of the convex curve formed by the cross section of the rotation locus of the outer peripheral blade (6) is within a range of 5 times or more and 20 times or less a curvature radius (r) of a convex curve formed by the cross section of the rotation locus of the trailing end blade (9).

2. The end mill according to Claim 1,
wherein the convex curve formed by the cross section of the rotation locus of the outer peripheral blade (6) gradually extends toward an inner peripheral side as the convex curve extends toward the leading end side of the end mill main body (1).

3. The end mill according to Claim 2,
wherein in the cross section along the axis (O) of the rotation locus around the axis (O), regarding a virtual taper line (N) connecting an intersection between an extension line of the convex curve formed by the rotation locus of the outer peripheral blade (6) and a straight line (M1) which passes through a position of the maximum diameter of the cutting blade (5) and is parallel to the axis (O) to an inner peripheral end of the convex curve formed by the rotation locus of the outer peripheral blade (6), a virtual taper angle (θ) of the virtual taper line (N) with respect to the axis (O) is within a range of 25° or more and 65° or less.

4. The end mill according to any one of Claims 1 to 3,
wherein in the cross section along the axis (O), a center (C) of the convex curve of the rotation locus of the outer peripheral blade (6) is located on an inner peripheral side of a straight line (M2) which passes through a position of the maximum diameter of the cutting blade (5) on a side opposite to the outer peripheral blade (6) with the axis (O) therebetween and is parallel to the axis (O).

5. The end mill according to any one of Claims 1 to 4,
wherein the twist angle (β) of the outer peripheral blade (6) is 40° or more.

6. The end mill according to any one of Claims 1 or 5,
wherein the radial rake angle (α) of the outer peripheral blade (6) is -10° or more and -3° or less.

7. The end mill according to any one of Claims 1 to 6,
wherein a core thickness (Dw) of the end mill main body (1) in a cross section, which is orthogonal to the axis (O), of a portion where the outer peripheral blade (6) is formed is 70% or more and 85% or less of a diameter (d) of the outer peripheral blade (6) in the same cross section.

8. The end mill according to any one of Claims 1 to 7,
wherein a length (L) of the outer peripheral blade (6) in a direction of the axis (O) is within a range of 0.2 times or more and 1.0 time or less the outer diameter (D).

9. The end mill according to any one of Claims 1 to 8,
wherein the cutting blade (5) further includes a bottom blade (8) of which a cross section along the axis (O) of the rotation locus around the axis (O) has a center on the axis (O) and which forms a convex curved shape being in contact with a leading end of the convex curve formed by the cross section of the rotation locus of the outer peripheral blade (6), on the leading end portion of the end mill main body (1), and
the curvature radius (R) of the convex curve formed by the cross section of the rotation locus of the outer peripheral blade (6) is within a range of 5 times or more and 20 times or less a curvature radius (r) of a convex curve formed by the cross section of the rotation locus of the bottom blade (8).

10. The end mill according to any one of Claims 1 to 9,
wherein a center of the curvature radius (r) of the convex curve formed by the cross section of the rotation locus of the trailing end blade (9) along the axis (O) is located on a trailing end side in the end mill main body (1) from the trailing end blade (9).

## Patentansprüche

1. Schaftfräser, umfassend:
einen wellenförmigen Schaftfräser-Hauptkörper (1), der in einer Schaftfräser-Drehrichtung (T) um eine Achse (O) gedreht wird;
eine Spanabführnut (4), die an einem Außenumfang eines vorderen Endabschnitts des Schaftfräser-Hauptkörpers (1) gebildet ist und sich von einer vorderen Endseite zu einer hinteren Endseite des Schaftfräser-Hauptkörpers (1) erstreckt; und
eine Schneidklinge (5), die eine Außenumfangsklinge (6) aufweist, die an einem Stegabschnitt einer Außenumfangsseite einer Wandoberfläche der Spanabführnut (4) gebildet ist, die der Schaftfräser-Drehrichtung (T) zugewandt ist,
wobei bei der Außenumfangsklinge (6) ein Querschnitt entlang der Achse (O) eines Drehortes um die Achse (O) herum eine konvexe gekrümmte Form aufweist, die in Richtung einer Außenumfangsseite des Schaftfräser-Hauptkörpers (1) hervorsteht,
ein Krümmungsradius (R) einer konvexen Kurve, die durch den Querschnitt des Drehortes der Außenumfangsklinge (6) festgelegt ist, um größer als 1/2 eines Außendurchmessers (D) der Schneidklinge (5) zu sein, der ein maximaler Durchmesser der Schneidklinge (5) ist, und 3-mal oder weniger des Außendurchmessers (D) beträgt,
beim Querschnitt entlang der Achse (O) sich eine Mitte (C) der konvexen Kurve des Drehortes der Außenumfangsklinge (6) auf einer der Außenumfangsklinge (6) gegenüberliegenden Seite mit der Achse (O) dazwischen befindet,
**dadurch gekennzeichnet, dass**
die Außenumfangsklinge (6) zu einer der Schaftfräser-Drehrichtung (T) entgegengesetzten Seite in Richtung einer hinteren Endseite des Schaftfräser-Hauptkörpers (1) verdrillt ist, und ein Verdrillwinkel (β) der Außenumfangsklinge (6) 20° oder mehr beträgt,
ein radialer Spanwinkel (α) der Außenumfangsklinge (6) -20° oder mehr und 0° oder weniger beträgt,
die Schneidklinge (5) weiter eine hintere Endklinge (9) an einem hinteren Endabschnitt der Außenumfangsklinge (6) einschließt, ein Querschnitt eines Drehortes der hinteren Endklinge (9) entlang der Achse (O) des Drehortes um die Achse (O) herum eine konvexe gekrümmte Form in Kontakt mit einem hinteren Ende der konvexen Kurve aufweist, die durch den Querschnitt des Drehortes der Außenumfangsklinge (6) gebildet ist, und einer Geraden (M1), die durch eine Position des maximalen Durchmessers der Schneidklinge (5), und parallel zur Achse (O) verläuft, die hintere Endklinge (9) ein äußerster Umfang der Schneidklinge (5) ist, und
der Krümmungsradius (R) der konvexen Kurve, die durch den Querschnitt des Drehortes der Außenumfangsklinge (6) gebildet ist, innerhalb eines Bereichs von 5-mal oder mehr und 20-mal oder weniger einem Krümmungsradius (r) einer konvexen Kurve liegt, die durch den Querschnitt des Drehortes der hinteren Endklinge (9) gebildet ist.

2. Schaftfräser nach Anspruch 1,
wobei sich die konvexe Kurve, die durch den Querschnitt des Drehortes der Außenumfangsklinge (6) gebildet ist, allmählich in Richtung einer Innenumfangsseite erstreckt, wenn sich die konvexe Kurve in Richtung der vorderen Endseite des Schaftfräser-Hauptkörpers (1) erstreckt.

3. Schaftfräser nach Anspruch 2,
wobei in dem Querschnitt entlang der Achse (O) des Drehortes um die Achse (O) herum in Bezug auf eine virtuelle Verjüngungslinie (N), die einen Schnittpunkt zwischen einer Erstreckungslinie der konvexen Kurve, die durch den Drehort der Außenumfangsklinge (6) gebildet ist, und einer Geraden (M1), die durch eine Position des maximalen Durchmessers der Schneidklinge (5) verläuft und parallel zur Achse (O) ist, mit einem Innenumfangsende der konvexen Kurve verbindet, die durch den Drehort der Außenumfangsklinge (6) gebildet ist, ein virtueller Verjüngungswinkel (θ) der virtuellen Verjüngungslinie (N) in Bezug auf die Achse (O) innerhalb eines Bereichs von 25° oder mehr und 65° oder weniger liegt.

4. Schaftfräser nach einem der Ansprüche 1 bis 3,
wobei beim Querschnitt entlang der Achse (O) sich eine Mitte (C) der konvexen Kurve des Drehortes der Außenumfangsklinge (6) auf einer Innenumfangsseite einer Geraden (M2) befindet, die durch eine Position des maximalen Durchmessers der Schneidklinge (5) auf einer der Außenumfangsklinge (6) gegenüberliegenden Seite mit der Achse (O) dazwischen verläuft und parallel zur Achse (O) ist.

5. Schaftfräser nach einem der Ansprüche 1 bis 4,
wobei der Verdrillwinkel (β) der Außenumfangsklinge (6) 40° oder mehr beträgt.

6. Schaftfräser nach einem der Ansprüche 1 oder 5,
wobei der radiale Spanwinkel (α) der Außenumfangsklinge (6) -10° oder mehr und -3° oder weniger beträgt.

7. Schaftfräser nach einem der Ansprüche 1 bis 6,
wobei eine Kerndicke (Dw) des Schaftfräser-Hauptkörpers (1) in einem Querschnitt, der orthogonal zur Achse (O) ist, eines Abschnitts, in dem die Außenumfangsklinge (6) gebildet ist, 70% oder mehr und 85% oder weniger eines Durchmessers (d) der Außenumfangsklinge (6) in demselben Querschnitt beträgt.

8. Schaftfräser nach einem der Ansprüche 1 bis 7,
wobei eine Länge (L) der Außenumfangsklinge (6) in einer Richtung der Achse (O) innerhalb eines Bereichs von 0,2-mal oder mehr und 1,0-mal oder weniger dem Außendurchmesser (D) liegt.

9. Schaftfräser nach einem der Ansprüche 1 bis 8,
wobei die Schneidklinge (5) weiter eine untere Klinge (8) einschließt, deren Querschnitt entlang der Achse (O) des Drehortes um die Achse (O) herum eine Mitte auf der Achse (O) aufweist und die am vorderen Endabschnitt des Schaftfräser-Hauptkörpers (1) eine konvexe gekrümmte Form bildet, die in Kontakt mit einem vorderen Ende der konvexen Kurve steht, die durch den Querschnitt des Drehortes der Außenumfangsklinge (6) gebildet wird, und
der Krümmungsradius (R) der konvexen Kurve, die durch den Querschnitt des Drehortes der Außenumfangsklinge (6) gebildet wird, innerhalb eines Bereichs von 5-mal oder mehr und 20-mal oder weniger einem Krümmungsradius (r) einer konvexen Kurve liegt, die durch den Querschnitt des Drehortes der unteren Klinge (8) gebildet ist.

10. Schaftfräser nach einem der Ansprüche 1 bis 9,
wobei sich eine Mitte des Krümmungsradius (r) der konvexen Kurve, die durch den Querschnitt des Drehortes der hinteren Endklinge (9) entlang der Achse (O) gebildet wird, auf einer hinteren Endseite in dem Schaftfräser-Hauptkörper (1) von der hinteren Endklinge (9) befindet.

## Revendications

1. Fraise en bout comprenant :
un corps principal de fraise en bout en forme d'arbre (1) qui est mis en rotation autour d'un axe (O) dans un sens de rotation de fraise en bout (T) ;
une goujure d'évacuation de copeaux (4) qui est formée sur une périphérie externe d'une portion d'extrémité avant du corps principal de fraise en bout (1) et s'étend d'un côté d'extrémité avant à un côté d'extrémité arrière du corps principal de fraise en bout (1) ; et
une lame de coupe (5) qui présente une lame périphérique externe (6) formée sur une portion de nervure du côté périphérique externe d'une surface de paroi de la goujure d'évacuation de copeaux (4) faisant face au sens de rotation de fraise en bout (T),
dans laquelle, dans la lame périphérique externe (6), une section transversale le long de l'axe (O) d'un lieu géométrique de rotation autour de l'axe (O) présente une forme courbe convexe qui fait saillie vers un côté périphérique externe du corps principal de fraise en bout (1),
un rayon de courbure (R) d'une courbe convexe formée par la section transversale du lieu géométrique de rotation de la lame périphérique externe (6) est défini comme étant supérieur à 1/2 d'un diamètre externe (D) de la lame de coupe (5) qui est un diamètre maximal de la lame de coupe (5) et 3 fois ou moins le diamètre externe (D),
dans la section transversale le long de l'axe (O), un centre (C) de la courbe convexe du lieu géométrique de rotation de la lame périphérique externe (6) est situé sur un côté opposé à la lame périphérique externe (6) avec l'axe (O) entre ceux-ci,
**caractérisée en ce que**
la lame périphérique externe (6) est vrillée vers un côté opposé au sens de rotation de fraise en bout (T) vers un côté d'extrémité arrière du corps principal de fraise en bout (1), et un angle d'hélice (β) de la lame périphérique externe (6) est de 20° ou plus,
un angle de coupe radial (α) de la lame périphérique externe (6) est de -20° ou plus et de 0° ou moins,
la lame de coupe (5) inclut en outre une lame d'extrémité arrière (9) au niveau d'une portion d'extrémité arrière de la lame périphérique externe (6), une section transversale d'un lieu géométrique de rotation de la lame d'extrémité arrière (9) le long de l'axe (O) du lieu géométrique de rotation autour de l'axe (O) présente une forme courbe convexe en contact avec une extrémité arrière de la courbe convexe formée par la section transversale du lieu géométrique de rotation de la lame périphérique externe (6) et avec une droite (M1) qui passe par une position du diamètre maximal de la lame de coupe (5) et est parallèle à l'axe (O), la lame d'extrémité arrière (9) est une périphérie la plus externe de la lame de coupe (5), et
le rayon de courbure (R) de la courbe convexe formée par la section transversale du lieu géométrique de rotation de la lame périphérique externe (6) se situe dans une plage de 5 fois ou plus et de 20 fois ou moins un rayon de courbure (r) d'une courbe convexe formée par la section transversale du lieu géométrique de rotation de la lame d'extrémité arrière (9).

2. Fraise en bout selon la revendication 1,
dans laquelle la courbe convexe formée par la section transversale du lieu géométrique de rotation de la lame périphérique externe (6) s'étend progressivement vers un côté périphérique interne à mesure que la courbe convexe s'étend vers le côté d'extrémité avant du corps principal de fraise en bout (1).

3. Fraise en bout selon la revendication 2,
dans laquelle, dans la section transversale le long de l'axe (O) du lieu géométrique de rotation autour de l'axe (O), concernant une ligne de conicité virtuelle (N) reliant une intersection entre une ligne de prolongement de la courbe convexe formée par le lieu géométrique de rotation de la lame périphérique externe (6) et une droite (M1) qui passe par une position du diamètre maximal de la lame de coupe (5) et est parallèle à l'axe (O) vers une extrémité périphérique interne de la courbe convexe formée par le lieu géométrique de rotation de la lame périphérique externe (6), un angle de conicité virtuel (θ) de la ligne de conicité virtuelle (N) par rapport à l'axe (O) se situe dans une plage de 25° ou plus et de 65° ou moins.

4. Fraise en bout selon l'une quelconque des revendications 1 à 3,
dans laquelle, dans la section transversale le long de l'axe (O), un centre (C) de la courbe convexe du lieu géométrique de rotation de la lame périphérique externe (6) est situé sur un côté périphérique interne d'une droite (M2) qui passe par une position du diamètre maximal de la lame de coupe (5) sur un côté opposé à la lame périphérique externe (6) avec l'axe (O) entre ceux-ci et est parallèle à l'axe (O).

5. Fraise en bout selon l'une quelconque des revendications 1 à 4,
dans laquelle l'angle d'hélice (β) de la lame périphérique externe (6) est de 40° ou plus.

6. Fraise en bout selon l'une quelconque des revendications 1 ou 5,
dans laquelle l'angle de coupe radial (α) de la lame périphérique externe (6) est de -10° ou plus et de -3° ou moins.

7. Fraise en bout selon l'une quelconque des revendications 1 à 6,
dans laquelle une épaisseur de noyau (Dw) du corps principal de fraise en bout (1) dans une section transversale, qui est orthogonale à l'axe (O), d'une portion où la lame périphérique externe (6) est formée est de 70 % ou plus et de 85 % ou moins d'un diamètre (d) de la lame périphérique externe (6) dans la même section transversale.

8. Fraise en bout selon l'une quelconque des revendications 1 à 7,
dans laquelle une longueur (L) de la lame périphérique externe (6) dans une direction de l'axe (O) se situe dans une plage de 0,2 fois ou plus et de 1,0 fois ou moins le diamètre externe (D).

9. Fraise en bout selon l'une quelconque des revendications 1 à 8,
dans laquelle la lame de coupe (5) inclut en outre une lame inférieure (8) dont une section transversale le long de l'axe (O) du lieu géométrique de rotation autour de l'axe (O) présente un centre sur l'axe (O) et qui forme une forme courbe convexe qui est en contact avec une extrémité avant de la courbe convexe formée par la section transversale du lieu géométrique de rotation de la lame périphérique externe (6), sur la portion d'extrémité avant du corps principal de fraise en bout (1), et
le rayon de courbure (R) de la courbe convexe formée par la section transversale du lieu géométrique de rotation de la lame périphérique externe (6) se situe dans une plage de 5 fois ou plus et de 20 fois ou moins un rayon de courbure (r) d'une courbe convexe formée par la section transversale du lieu géométrique de rotation de la lame inférieure (8).

10. Fraise en bout selon l'une quelconque des revendications 1 à 9,
dans laquelle un centre du rayon de courbure (r) de la courbe convexe formée par la section transversale du lieu géométrique de rotation de la lame d'extrémité arrière (9) le long de l'axe (O) est situé sur un côté d'extrémité arrière dans le corps principal de fraise en bout (1) à partir de la lame d'extrémité arrière (9).
